# EUROPEAN PATENT APPLICATION

(11) **EP 1 029 646 A1**
(43) Date of publication of application: **23.08.2000**
(21) Application number: 00200078.4
(22) Date of filing: 11.01.2000
(51) Int. Cl.: B29C 45/16, H01Q 1/36

(54) **Two-shot injection molding process for making quadrifilar antennas**

(30) Priority: 16.02.1999 US 250644
(71) Applicant: Gabriel Technologies, Inc., Elgin, Illinois 60123 (US)
(72) Inventor: Spiegel, Marko Frank, LaFox, Illinois 60147 (US); Pollock, John Edward, Penfield, New York 14526 (US)
(74) Representative: Long, Edward Anthony

(57) **Abstract**

A novel process is used to form a device (20), such as an quadrifilar antenna. The novel process includes four main steps. First, a first part (22, 24, 26, 28, 30, 32, 34, 36, 38 40, 42, 44, 46; 22, 24, 26, 28, 52, 54) is molded from a plateable plastic material. The first part has at least a pair of spaced apart body portions (22, 24, 26, 28; 22, 24, 26, 28)which are connected together solely by at least one connecting portion (30, 32, 34, 36, 38, 40, 42, 44, 46; 52, 54). Second, the first part is completely plated with a conductive material by a known plating process. Third, the first part is overmolded with at least one second part (48, 50; 56; 60) made of a moldable, insulative material, such as plastic. The second part connects the body portions of the first part together. Fourth, the connecting portion of the first part is removed by suitable means, such as by using a blanking die. An optional fifth step can be performed in the novel process which includes inserting a non-conductive member (58) between the body portions prior to the step of overmolding the first part with the second part.

## Description

### BACKGROUND OF THE INVENTION

This invention is generally directed to a novel two-shot molding process for forming a device, such as an quadrifilar antenna and higher current applications. More particularly, the invention contemplates a novel two-shot molding process which has better tolerances and more reliability in repeated molding operations than prior art two-shot molding processes and is less expensive than prior art two-shot molding processes.

In the two-shot prior art process to form a quadrifilar antenna, first a pair of rings are shot into a mold (the first shot). Thereafter, four helix filars wound around an axis in the same winding direction are shot into the mold (the second shot) with the rings at the ends thereof. Finally, the helix filars are selectively plated. With this prior art process, extraneous plating material can be formed on the rings which can cause electrical shorts.

The present invention provides a novel process which overcomes the problems present in the prior art and provides several advantages which will become apparent upon a reading of the attached specification in combination with a study of the drawings.

### OBJECTS AND SUMMARY OF THE INVENTION

A general object of the present invention is to provide a novel two-shot molding process for forming a device, such as an antenna.

An object of the present invention is to provide a novel two-shot molding process which has better tolerances and more reliability in repeated molding operations than prior art two-shot molding processes and is less expensive than prior art two-shot molding processes.

Another object of the present invention is to provide a novel two-shot molding process which eliminates the necessity of selective plating thereby resulting in the elimination of quality risks associated with selective plating of prior art two-shot processes, such as extraneous plating, electrical shorts because of access plating, cracking of non-plateable material and the like.

A further object of the present invention to provide a novel two-shot molding process which is suitable to form antennas and higher current applications.

Briefly, and in accordance with the foregoing, the present invention discloses a novel process for forming a device, such as an quadrifilar antenna. The novel process includes four main steps. First, a first part is molded from a plateable plastic material. The first part has at least a pair of spaced apart body portions which are connected together solely by at least one connecting portion. Second, the first part is completely plated with a conductive material by a known plating process. Third, the first part is overmolded with at least one second part made of a moldable, insulative material, such as plastic. The second part connects the body portions of the first part together. Fourth, the connecting portion of said first part is removed by suitable means, such as by using a blanking die. An optional fifth step can be performed in the novel process which includes inserting a non-conductive member between the body portions prior to the step of overmolding the first part with the second part.

### BRIEF DESCRIPTION OF THE DRAWINGS

The organization and manner of the structure and operation of the invention, together with further objects and advantages thereof, may best be understood by reference to the following description, taken in connection with the accompanying drawings, wherein like reference numerals identify like elements in which:
FIGURES 1-8 illustrate the steps performed in the novel method of the present invention which are used to form a quadrifilar antenna;
FIGURES 9-12 illustrate the steps performed in the novel method of the present invention which are used to form a quadrifilar antenna; and
FIGURES 13-15 illustrate the steps performed in the novel method of the present invention which are used to form a quadrifilar antenna.

### DETAILED DESCRIPTION OF THE ILLUSTRATED EMBODIMENT

While the invention may be susceptible to embodiment in different forms, there is shown in the drawings, and herein will be described in detail, a specific embodiment of the novel process of the present invention with the understanding that the present disclosure is to be considered an exemplification of the principles of the invention, and is not intended to limit the invention to that as illustrated and described herein.

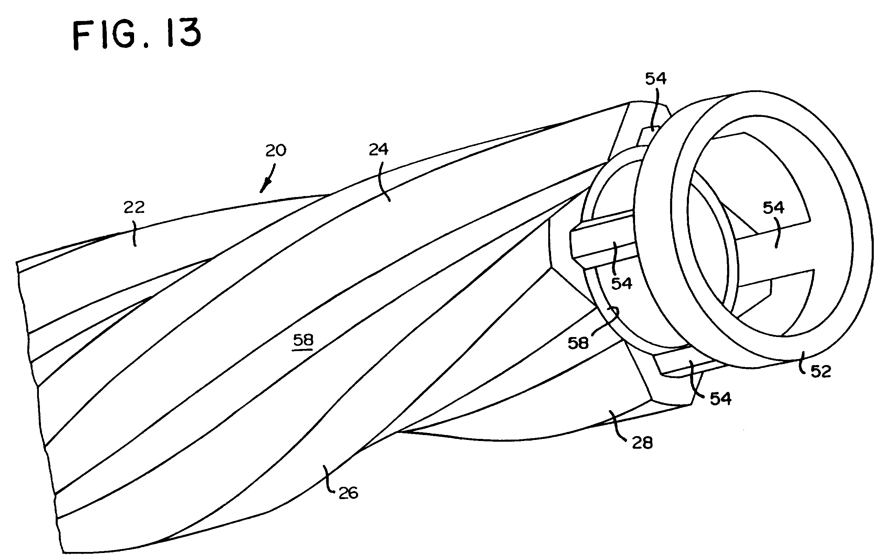

The present invention provides a novel two-shot process to manufacture selectively plated plastic parts which supplies one or multiple electrically isolated areas. The result is a composite plastic part or two-shot part of which one plastic is completely plated with metal and another plastic is not plated. The novel process of the present invention is performed by performing four main steps. An additional fifth step is later described with reference to FIGURES 13-15.

The first step in the novel process is to mold a first part out of a plateable plastic material. This is also called the first shot. The first part has at least a pair of body portions connected together solely by connecting portions. The plateable plastic material can be made of a variety of materials, for example, but not limited to, LCP (liquid crystal polymer), PEI (polyethermid), SPS (sydiotactic polystyrene), PA (nylon type 6, 6/6, 4.6, high-temperature nylon), PES (polyethersulfone), thermoplastic polyester such as PET (polyethylene terephthalate) and PBT (polybutylene terephthalate), ABS (acrylonitrile butadiene styrene) and PPA (polyphthalamide).

The second step in the novel process is to completely plate the first part by a known plastic plating process. This plating step can be performed by a variety of known processes for depositing any metal deposition on plastic, such as, for example, but not limited to, electroplating, electrolytic, electro-less, PVD, etc. Most commonly, a wet chemical deposition of metals, such as, but not limited to, copper having a typical thickness of 0.0005 inch to 0.002 inch, nickel for corrosion protection, wear resistance and the like, tin for soldering and corrosion protection, gold (hard or soft) for low contact resistance and soldering, palladium, and others, is used.

The third step in the novel process is to overmold an insulative, non-conductive second part onto the first part in another mold tool. This is also called the second shot. The second shot mechanically connects the body portions of the first shot together. The material which is used to form the second shot can be any moldable material which is an insulator. Commonly engineered plastics are preferred because of thermal, mechanical and electrical properties. The plastic can be of a variety of types, including, but not limited to, PPA, LCP, PBT, PET, nylon, PES, PEI, PC (polycarbonate), PCT (polycyclohexylene terephtalate) and polypropylene.

The fourth and final step in the novel process is to disconnect the electrical connections of the traces by removing or disconnecting the connecting portions from the body portions of the first part. This removal is performed by a suitable tool, such as a blanking tool or die. The removal of the connecting portions electrically disconnects the body portions from each other in a reliable manner and leaves as little as possible cutting burrs.

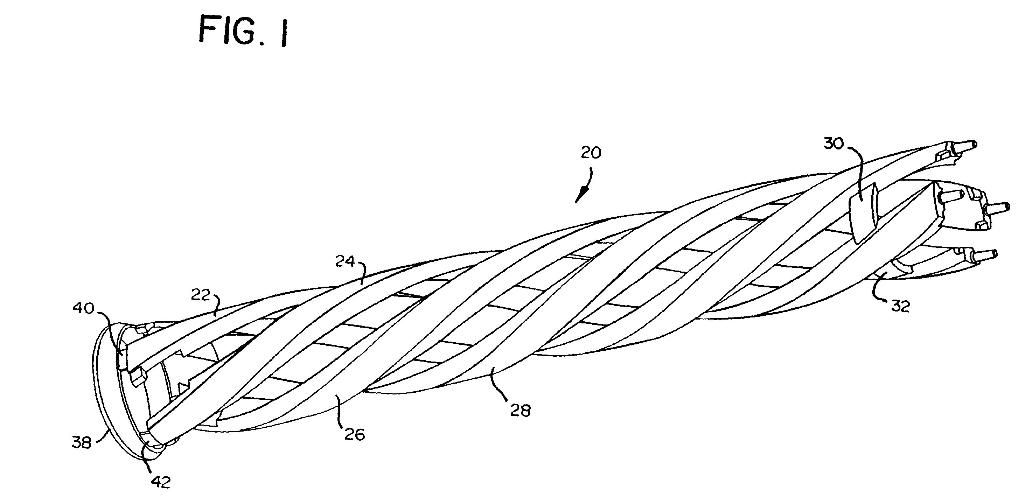

FIGURES 1-8 illustrate the novel process of the present invention being used to form a quadrifilar helix antenna 20.

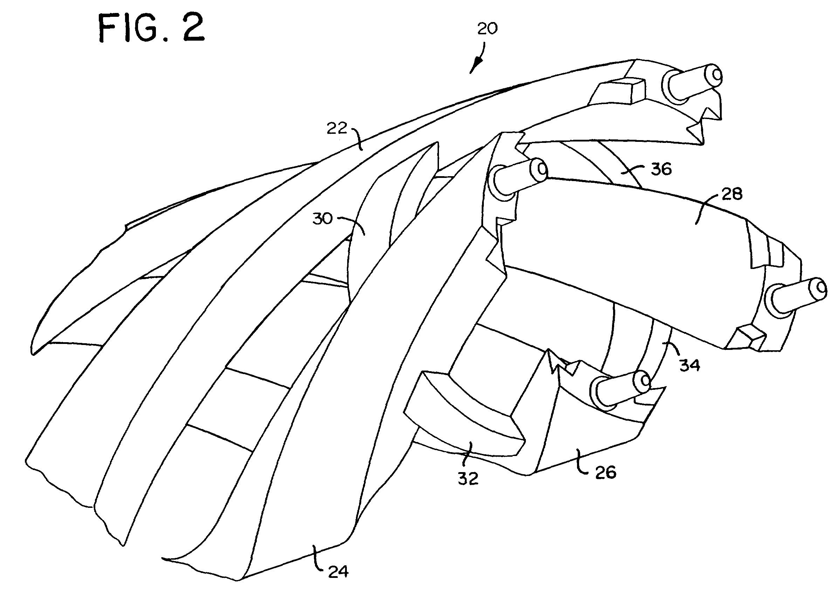

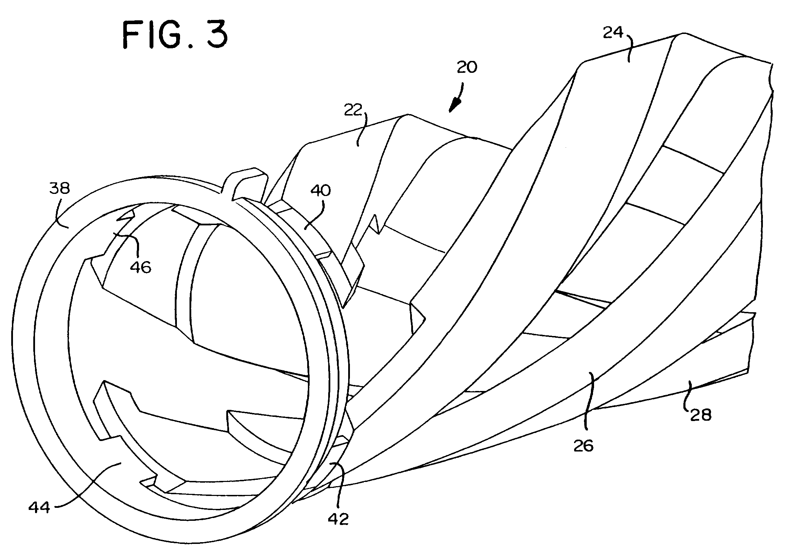

FIGURES 1-3 illustrate step one of the process and the molded first part is shown as a quadrifilar helix antenna 20. The quadrifilar helix antenna 20 includes four helix filars 22, 24, 26, 28 wound around an axis in the same winding direction. Thus, the body portions described above are the four spaced-apart, helix filars 22, 24, 26, 28. The connecting portions described above are connecting beams 30, 32, 34, 36 and a plating ring 38 connected by struts 40, 42, 44, 46 to the ends of the respective filars 22, 24, 26, 28. Specifically, and as best shown in FIGURE 2, connecting beam 30 is provided between filars 22 and 24 and proximate to one end of the filars 22, 24; connecting beam 32 is provided between filars 24 and 26 and proximate to one end of the filars 24, 26; connecting beam 34 is provided between filars 26 and 28 and proximate to one end of the filars 26, 28; and connecting beam 36 is provided between filars 28 and 22 and proximate to one end of the filars 28, 22. As best shown in FIGURE 3, strut 40 is connected to the end of the filar 22 at the end opposite to that of the connecting beams 30, 32, 34, 36; strut 42 is connected to the end of the filar 24 at the end opposite to that of the connecting beams 30, 32, 34, 36; strut 44 is connected to the end of the filar 26 at the end opposite to that of the connecting beams 30, 32, 34, 36; and strut 46 is connected to the end of the filar 28 at the end opposite to that of the connecting beams 30, 32, 34, 36.

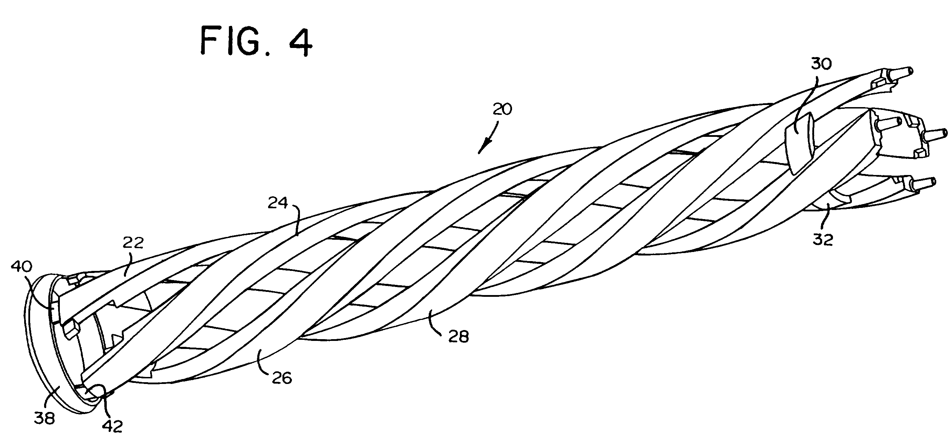

FIGURE 4 illustrates step two of the present process. In this step, as discussed above, the first part, including the filars 22, 24, 26, 28, the connecting beams 30, 32, 34, 36, the plating ring 38 and the struts 40, 42, 44, 46, is completely plated by a known plastic plating process. That is, all surfaces are plated by a known plating process.

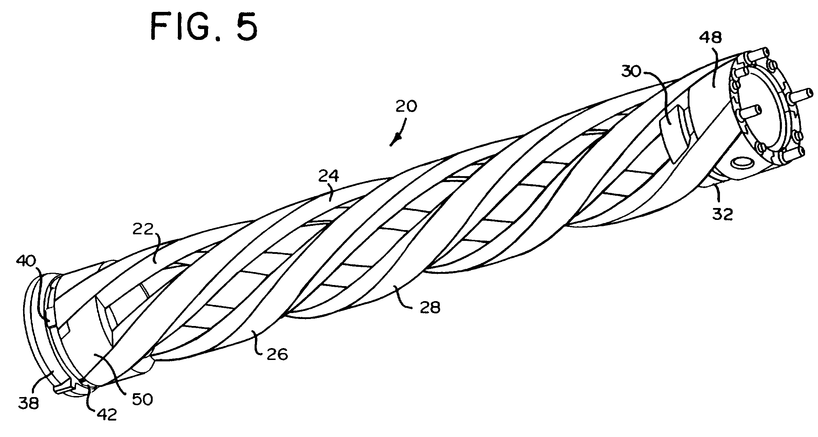

FIGURE 5 illustrates step three of the process. When the second part is overmolded onto the filars 22, 24, 26, 28, a first, non-conductive ring 48 is provided at one end of the helix filars 22, 24, 26, 28 between the connecting beams 30, 32, 34, 36 and the end of the filars 22, 24, 26, 28, and a second, non-conductive ring 50 is provided at the opposite end of the helix filars 22, 24, 26, 28 proximate to the struts 40, 42, 44, 46. The rings 48, 50 connect the filars 22, 24, 26, 28 together at each end thereof.

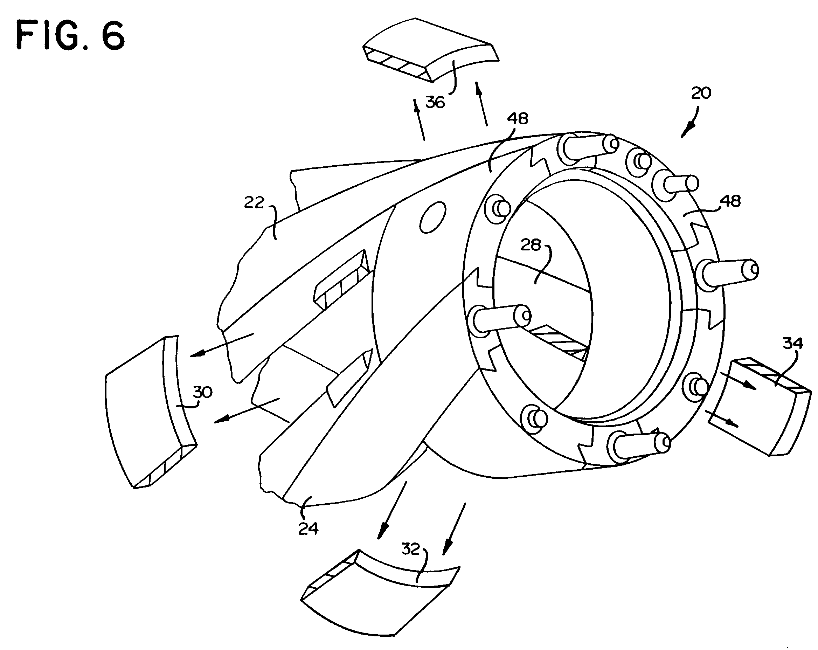

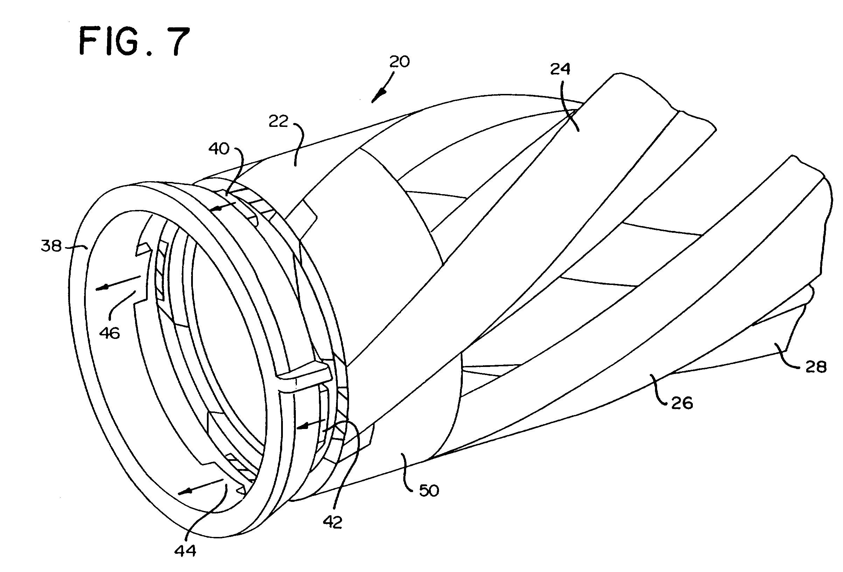

FIGURES 6 and 7 illustrate step four of the process. The connecting beams 30, 32, 34, 36, the plating ring 38 and the struts 40, 42, 44, 46 are removed from the filars 22, 24, 26, 28 to disconnect the electrical connections between the filars 22, 24, 26, 28 which had been provided by the connecting beams 30, 32, 34, 36, the plating ring 38 and the struts 40, 42, 44, 46.

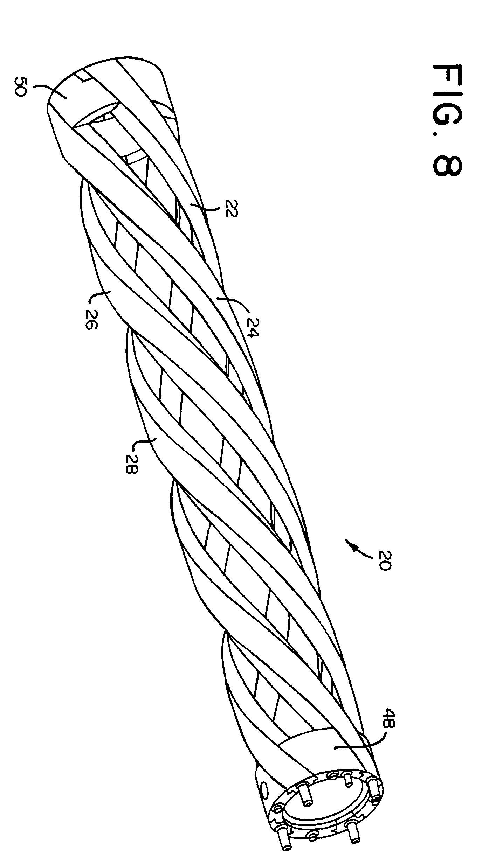

Finally, FIGURE 8 illustrates the finished antenna 20.

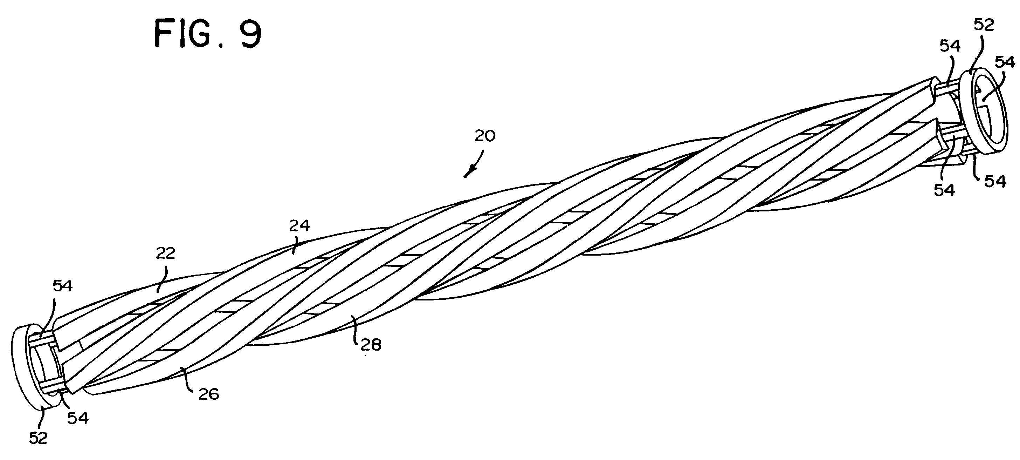

FIGURES 9-12 illustrate the novel process with alternate connecting portions for the filars 22, 24, 26, 28 and an alternate second part. The connecting portions are plating rings 52 connected to each end of the filars 22, 24, 26, 28 connected by respective struts 54. FIGURE 9 illustrates step two of the novel process wherein the first part, the filars 22, 24, 26, 28, the plating rings 52 and the struts 54, is completely plated by a known plating process.

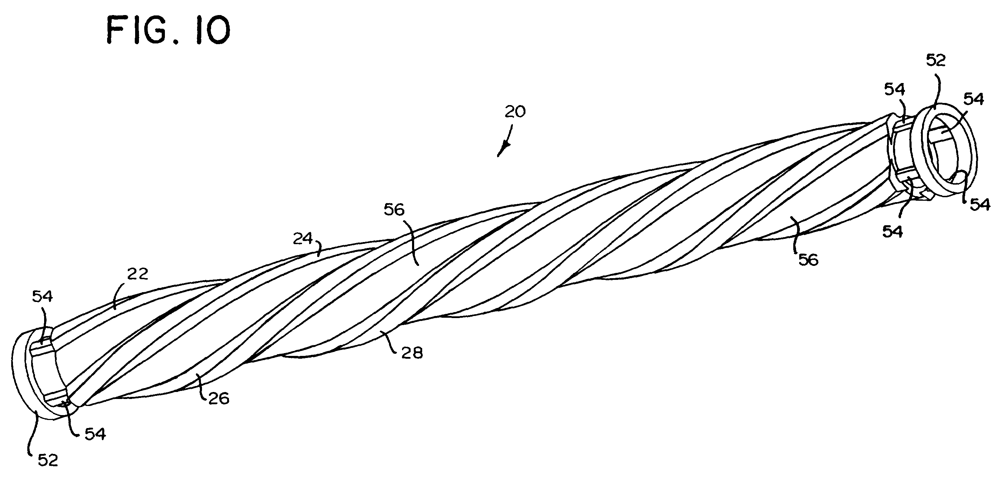

FIGURE 10 illustrates step three of the process. When the second part is overmolded onto the filars 22, 24, 26, 28, the second, non-conductive part 56 completely fills the spaces between the filars 22, 24, 26, 28 thereby connecting the filars 22, 24, 26, 28 together, but leaves a center portion between the 22, 24, 26, 28 empty of material.

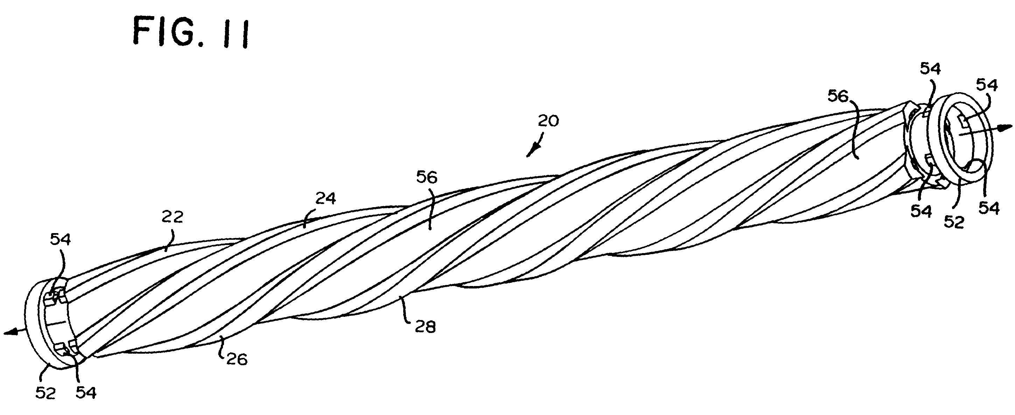

FIGURE 11 illustrate step four of the process. The plating rings 52 and the struts 54 are removed from the filars 22, 24, 26, 28 to disconnect the electrical connections between the filars 22, 24, 26, 28 which had been provided by the plating rings 52 and the struts 54.

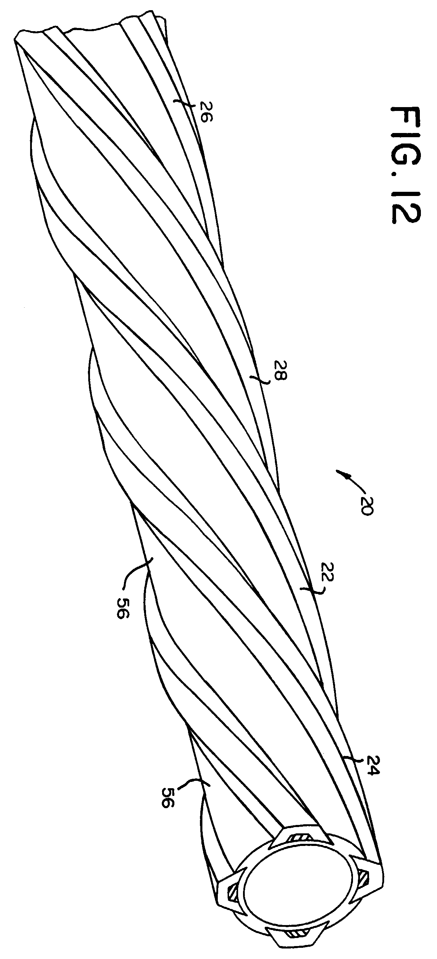

Finally, FIGURE 12 illustrates a portion of the finished antenna 20.

FIGURES 13-15 illustrate an additional fifth step which can be added to the novel process. The first part is pre-molded and completely plated like that shown in FIGURE 9 (steps one and two have been performed). Thereafter, as shown in FIGURE 13, a non-conductive tube 58 is inserted in the inside of the plated first part.

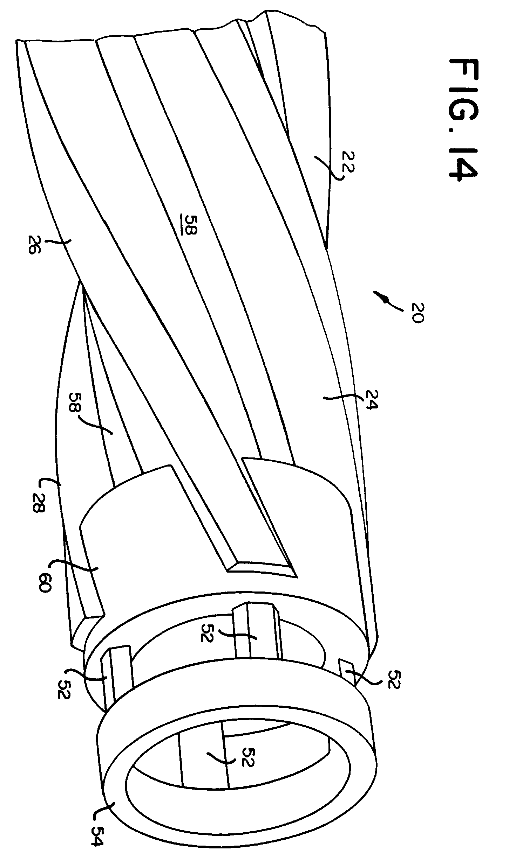

FIGURE 14 illustrates step three of the process as described above. When the second part is overmolded onto the filars 22, 24, 26, 28, non-conductive rings 60 (only one of which is shown) is provided at opposite ends of the filars 22, 24, 26, 28 adjacent to the struts 52. The rings 60 sit upon the ends of the tube 58 and connect the filars 22, 24, 26, 28 together.

Thereafter, the plating rings 52 and the struts 54 are removed from the filars 22, 24, 26, 28 (step four) to disconnect the electrical connections between the filars 22, 24, 26, 28 which had been provided by the plating rings 52 and the struts 54.

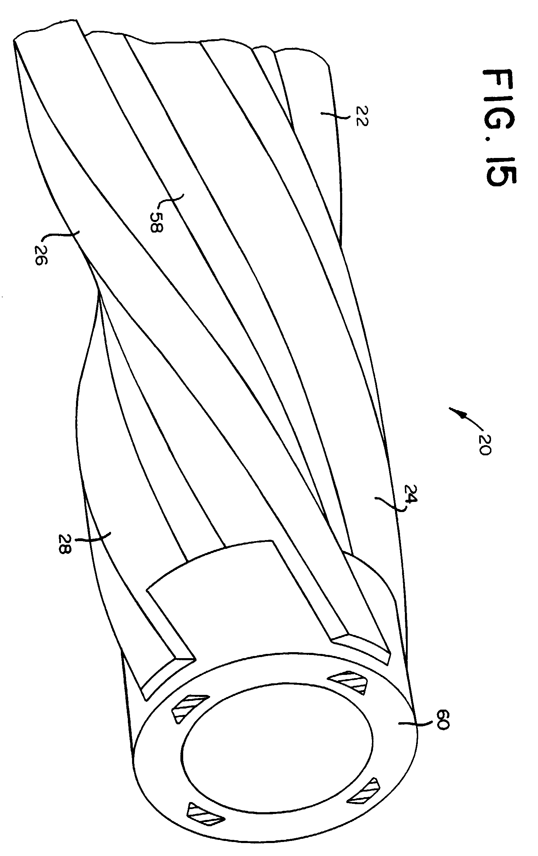

Finally, FIGURE 15 illustrates a portion of the finished antenna 20.

One example of the materials that can be used to form an antenna 20 in accordance with the present novel process is to use PBT for the first part, the plating is 0.0005 inches of copper and 0.00003 inches immersion in tin as an over-coat for soldering and corrosion protection, and PPA for the overmolded rings.

It is to be understood that the present novel process can be used to form other devices than an antenna 20 as shown in the drawings. It is to be understood that the additional fifth step (the insertion of the tube 58 or another like member which will lie underneath the second part) can be performed in the process when used to form any device. Also, it is to be understood that the non-conductive second part can be used to fill the spaces between the body portions when the process is used to form any device.

The novel process of the present invention provides several advantages. The present process provides better tolerances and more reliability in repeated molding operations than prior art two-shot molding processes. The present process eliminates the necessity of selective plating. This results in the elimination of quality risks associated to selective plating of prior art two-shot processes, such as extraneous plating, electrical shorts because of access plating, cracking of non-plateable material and the like. In addition, a conductor is created with a consistent enclosed metal surface. That is to say, when each filar 22, 24, 26, 28 of the antenna 20 is examined in cross-section, metal is plated completely around each filar 22, 24, 26, 28 (with the exception of the portions proximate to where the connecting beams and the struts were removed). This is an advantage in antennas and high current applications. In the prior art, plating is not provided around the entire filar. Moreover, the full surface plating process used in the second step of this novel process is less expensive relative to selective plating and it is more robust. Electrolytic plating is much easier to realize than on selectively plated parts. This opens the choice of plating options. Because electrolytic plating can be applied, cost per copper, tin, gold and other deposits are substantially lower. Finally, there are no plating related limitations of the overmold material application compared to selective plating of two-shot parts.

While a preferred embodiment of the present invention is shown and described, it is envisioned that those skilled in the art may devise various modifications of the present invention without departing from the spirit and scope of the appended claims.

## Claims

1. A process for forming a device (20) *being characterized* by the steps of:
molding (Figure 1) a first part (22, 24, 26, 28, 30, 32, 34, 36, 38, 40, 42, 44, 46; 22, 24, 26, 28, 52, 54) from a plateable plastic material;
plating (Figure 4; Figure 9) said first part with a conductive material;
overmolding (Figure 5; Figure 10; Figure 14) said first part with a second part (48, 50; 56; 60) made of a moldable material; and
removing (Figures 6 and 7; Figure 11) at least a portion (30, 32, 34, 36, 38, 40, 42, 44, 46; 52, 54) of said first part.

2. A process as defined in claim 1, *being characterized in that* said second part is formed from plastic.

3. A process as defined in claim 1, *being characterized in that* said second part is formed from an insulative material.

4. A process as defined in claim 1, *being characterized in that* said first part is formed from LCP, PEI, SPS, PA, PES, thermoplastic polyester, ABS, PPA, or the like.

5. A process as defined in claim 1, *being characterized in that* said first part is plated with copper, nickel, tin, gold, palladium, or the like.

6. A process as defined in claim 1, *being characterized in that* said step of removing at least a portion of said first part is performed by using a blanking die.

7. A process for forming a device (20) *being characterized* by the steps of:
molding (Figure 1) a first part (22, 24, 26, 28, 30, 32, 34, 36, 38 40, 42, 44, 46; 22, 24, 26, 28, 52, 54) from a plateable plastic material, said first part having at least a pair of spaced apart body portions (22, 24, 26, 28; 22, 24, 26, 28), said body portions being connected together solely by at least one connecting portion (30, 32, 34, 36, 38, 40, 42, 44, 46; 52, 54);
plating (Figure 4; Figure 9) said first part with a conductive material;
overmolding (Figure 5; Figure 10; Figure 14) said first part with at least one second part (48, 50; 56; 60) made of a moldable material, said at least one second part connecting said body portions of said first part together; and
removing (Figures 6 and 7; Figure 11) said at least one connecting portion of said first part.

8. A process as defined in claim 7, *being characterized in that* said at least one second part is formed from plastic.

9. A process as defined in claim 7, *being characterized in that* said at least one second part is formed from an insulative material.

10. A process as defined in claim 7, *being characterized in that* said first part is formed from LCP, PEI, SPS, PA, PES, thermoplastic polyester, ADS, PPA, or the like.

11. A process as defined in claim 7, *being characterized in that* said first part is plated with copper, nickel, tin, gold, palladium, or the like.

12. A process as defined in claim 7, *being characterized in that* said step of removing said at least one connecting portion of said first part is performed by using a blanking die.

13. A process as defined in claim 7, *being further characterized by* the step of inserting (Figure 13) a non-conductive member (58) between said body portions prior to said step of overmolding said first part with at least one second part.

14. A process as defined in claim 7, *being characterized in that* each said body portion is a helix.

15. A process as defined in claim 14, *being characterized* in that said at least one connecting portion connects said helixes together prior to the removal thereof.

16. A process as defined in claim 14, *being further characterized by* the step of inserting a non-conductive tubular member between said body portions prior to said step of overmolding said first part with at least one second part.

17. A process as defined in claim 7, *being characterized in that* said step of overmolding said first part with a second part made of a moldable material comprises completely filling spaces adjacent the body portions.

18. A process as defined in claim 17, *being characterized in that* said second part is a non-conductive material.
